# EUROPEAN PATENT SPECIFICATION

(11) **EP 0 384 674 B1**
(45) Date of publication and mention of the grant of the patent: **23.08.1995**
(21) Application number: 90301737.4
(22) Date of filing: 19.02.1990
(51) Int. Cl.: F16K 11/20

(54) **Flow control valves**
Strömungsregelventile
Vannes de commande de courant

(30) Priority: 21.02.1989 GB 8903902
(43) Date of publication of application: 29.08.1990
(73) Proprietor: STOVES LIMITED, Prescot, Merseyside L35 2XW (GB)
(72) Inventor: McMaster-Christie, Colin, Fordingbridge, Hampshire (GB)
(74) Representative: Pearce, Anthony Richmond

(56) References cited:
- WO-A-81/02053
- CH-A- 648 390
- DE-A- 2 413 420
- GB-A- 2 089 003

## Description

This invention relates to flow control valves for enabling total and proportional flow control of two fluids. More particularly, although not exclusively, this invention relates to a mixer valve in which such fluids are mixed in the required proportions before being discharged through a common outlet.

One particular application to which such valves may be directed is the domestic shower bath supplied with hot and cold water where the user employs one control to set the desired total water flow and another control to set the shower at a desired temperature by controlling the relative proportions of hot and cold water.

It is highly desirable that the effect of these two controls should be independent of one another, i.e. adjustment of the flow rate should have little effect upon the temperature of the shower and vice versa.

A number of constructions have been proposed to this end, but a problem has been experienced in keeping the effect of the controls independent particularly in the extreme cases where the desired settings are such that the flow of one liquid must be much higher than the other or such that the total flow must be relatively low. One such valve is disclosed in GB-A-2089003 in which a thermostatically controlled mixer valve has three superimposed plates, each having a pair of circular bores therethrough. The lower plate is fixed against movement. The intermediate plate is rotatable relative to the lower plate, the rotary position of the former determining the total quantity of hot and cold water which can flow through the respective cooperating bores. The upper plate is displaceable linearly over the intermediate plate and serves to alter the ratio of hot water to cold water. However, because of the circular shape of the bores changes in the effective cross-sectional area thereof occur not only due to movement of the intermediate and upper plates but also because of changes in the effective cross-sectional area of the bores themselves and this prevents independent control of total flow rate and water temperature.

In WO81/02053, there is disclosed a mixing valve for cold and hot water wherein adjustment of the total flow rate and temperature is enabled by the provision of a distributor plunger which is provided with transverse openings of square cross-sectional area and which cooperates with the openings of a distributor sleeve. The openings of the sleeve are connected on the one hand to intake openings of the valve and, on the other hand, to a combined flow outlet. Water temperature control is effected by axial movement of the plunger in the sleeve, whilst total flow control is effected by rotation of the plunger within the sleeve. However, such a valve has the disadvantage that, to provide the relatively high flow rates required for showers, the design would have to be quite bulky. Additionally, it is difficult to maintain an effective seal between the distributor plunger and the surrounding distributor sleeve.

It is an object of the present invention to provide an improved construction of a flow control valve.

The present invention consists in a flow control valve providing total and proportional control of two fluids comprising a valve body with a separate inlet port for each fluid and an outlet for the fluids, slidable valve means mounted in the body for sliding movement relative to the inlet ports, the valve means including at least one valve plate with two spaced flow control ports each of which cooperates with one of the inlet ports to control the flow of fluid therethrough, the plate being located between the inlet ports and the outlet, guide means constraining the valve means to slide relatively to the inlet ports in first and second directions to control the flow of fluid therethrough, first and second independently operable means connected with the valve means and arranged to move the latter in said first and second directions respectively, the inlet and flow control ports being so positioned relative to each other and to the first and second directions that movement of the valve means in the first direction causes the effective cross-sectional area for flow of each fluid to be changed simultaneously, whilst movement of the valve means in the second direction causes the effective cross-sectional area for flow of one of the fluids to be increased or decreased whilst that for flow of the other fluid is respectively decreased or increased characterised in that the first and second directions are transverse one with respect to the other and in that each one of the inlet ports and flow control ports is of quadrilateral cross-sectional shape with a pair of opposite edges thereof extending in the first direction and a second pair extending in the second direction, the first and second directions being substantially co-planar.

The flow control valve of the invention can be made in a compact form and enables independent control of total flow and of temperature.

In one embodiment, the valve means comprises a plate having a flow control port for each of a respective one of said inlet ports, and the guide means is arranged to cooperate with said plate so as to constrain it for movement in both of said first and second directions.

In another embodiment, the valve means comprises a first plate slidable in said first direction and having a first set of said flow control ports therein, and a second plate slidable in said second direction and having a second set of the flow control ports therein, respective ones of the flow control ports of the first and second sets cooperating mutually and with a respective one of the inlet ports, and said first and second independently operable means are connected with the first and second plates respectively.

In a further embodiment, the valve means comprises (a) a ported plate having a flow control port for each of a respective one of the inlet ports, said ported plate being slidable in said first direction relative to said inlet ports, and (b) an unported plate disposed on an opposite surface of said ported plate to said inlet ports and being slidable in said second direction, said unported plate having a pair of mutually spaced opposite side edges extending substantially in said first direction and being unported between said opposite side edges, each of said side edges of the unported plate cooperating with a respective one of said flow control ports so as to alter the effective cross-sectional area thereof upon sliding movement of the unported plate in said second direction.

In a still further embodiment, the valve means comprises (a) a ported plate having a flow control port for each of a respective one of the inlet ports, said ported plate being slidable in said second direction relative to said inlet ports, and (b) an unported plate disposed on an opposite surface of said ported plate to said inlet ports and being slidable in said first direction, said unported plate having a side edge which extends substantially in said second direction and which cooperates with both of said flow control ports.

In the last two embodiments, it is particularly preferred for the unported plate to be provided with a respective projection which extends into each flow control port of the ported plate. Each said projection preferably has a height which is substantially equal to the thickness of the ported plate at least in the region of the respective port so that the effective area for flow through each of the flow control ports at all positions of relative adjustment of the ported and unported plates is determined by edges which are substantially co-planar with each other and with the respective inlet port with which they cooperate.

Most conveniently, each inlet port is defined by a resilient seal which engages against the ported plate.

In a preferred construction, the unported plate is held against the ported plate by means of a further plate which is engaged, eg by a snap-fit action, with the ported plate so that the unported plate is held between the ported plate and the further plate.

The first and second directions are preferably mutually perpendicular, or substantially so.

It is not essential for said first and second mutually transverse directions to be linear, it is possible for one or both of them to be curved, eg arcuate, provided that the relevant edges of the port extend substantially in the specified directions.

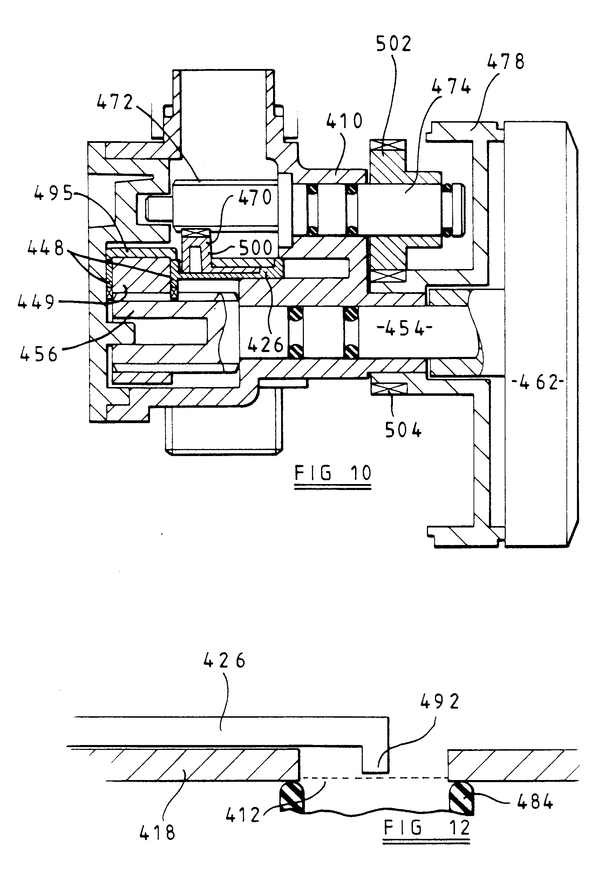

Particularly in cases where it is important to operate the valve such that the effective cross-sectional area for flow of one fluid is very much greater than that for flow of the other fluid (eg where a very large proportion of cold water is to be mixed with a very small proportion of very hot water for a shower), it is preferred to arrange for one of said first pair of opposite edges of one of the ports for said other fluid to be inclined at a slight angle, eg up to about 5°, to said first direction, the thus inclined edge being that which defines part of said effective cross-sectional area for flow of said other fluid under conditions of low flow rate of the latter. With such an inclined edge, the condition is avoided wherein the low flow of said other fluid takes place as a result of passage through a very fine slit extending over the full dimension of the port. Under such a condition, there is a tendency for the flow to be irregular and prone to obstruction by any solid matter which may become entrained in the fluid. The inclined edge is preferably the effective edge of the flow control port for said other fluid, eg as illustrated by dotted line 31 in attached Fig. 4.

Preferably, the flow control valve is a mixer valve wherein the body includes a common chamber with which all of the flow control ports are in communication, said common chamber being provided with an outlet for the combined fluid streams.

In the accompanying drawings:-
Fig. 1 is a general view of part of a first embodiment of flow control valve according to the present invention shown diagrammatically to indicate the principle of its operation,
Fig. 2 shows the valve components of Fig. 1 with an additional component,
Figs. 3 and 4 are similar to Figs. 1 and 2 respectively but with the components in a different state of adjustment,
Figs. 5 and 6 are views of a portion of Fig. 4 looking in a direction towards the inlets.
Fig. 7 is an exploded perspective view of a second embodiment of flow control valve according to the present invention,
Fig. 8 is an exploded perspective view of a third embodiment of flow control valve according to the present invention,
Fig. 9 is an axial section through a fourth embodiment of flow control valve according to the present invention,
Fig. 10 is another axial section of the valve taken perpendicularly to that of Fig. 9, Fig. 11 is a cross-section of the valve of Figs. 9 and 10 with parts omitted for clarity, and Fig 12 shows a detail modification.

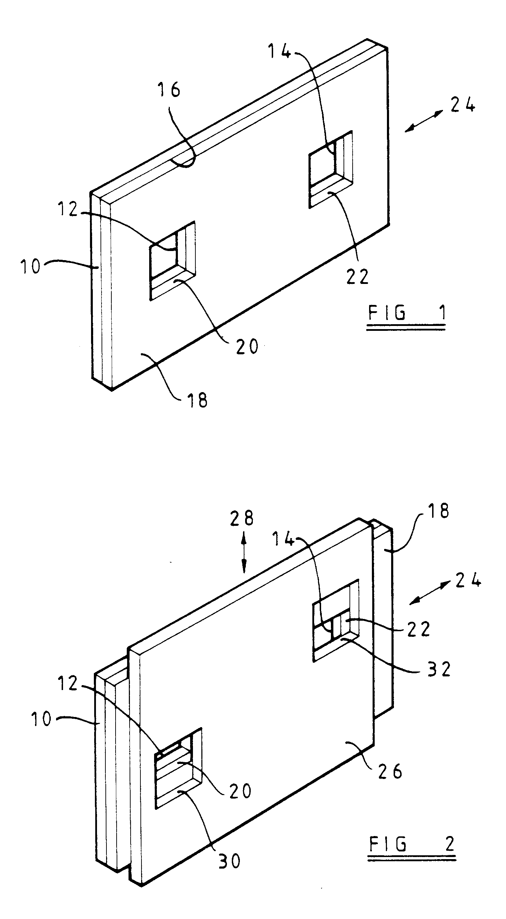

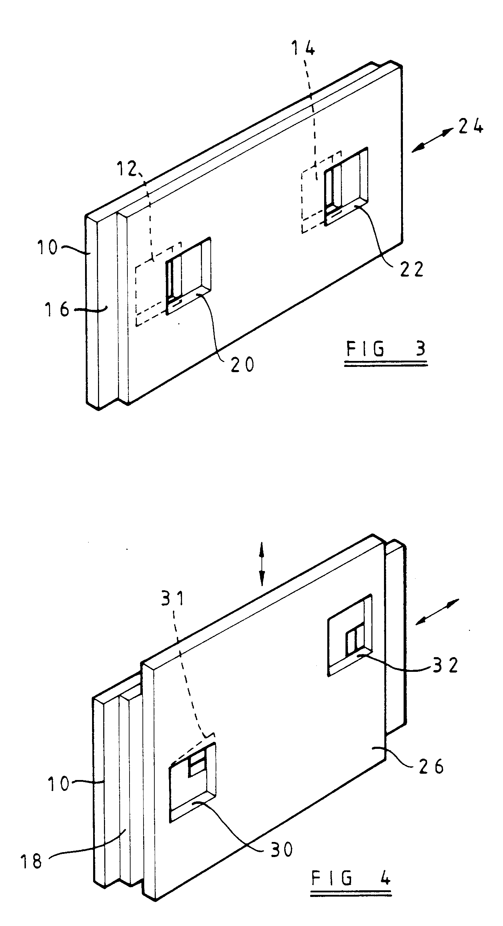

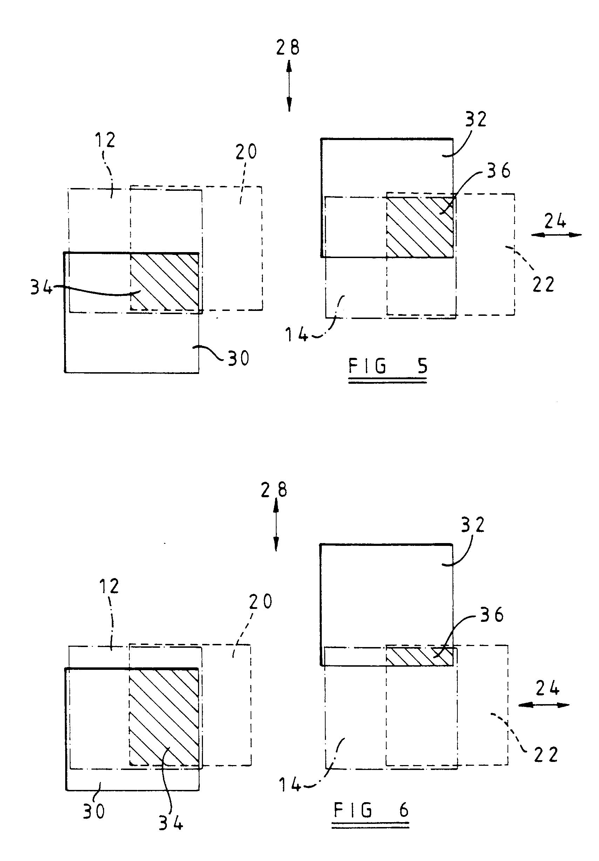

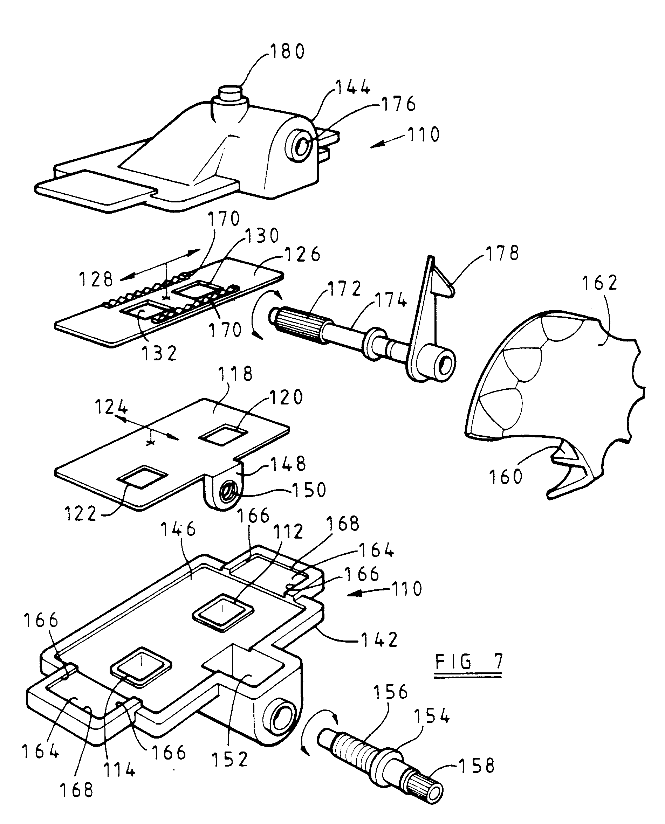

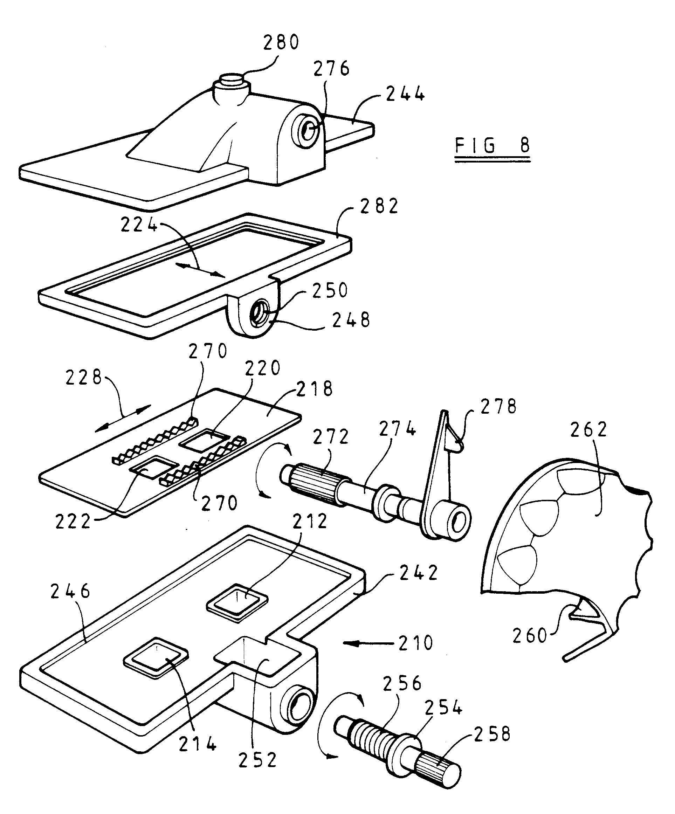

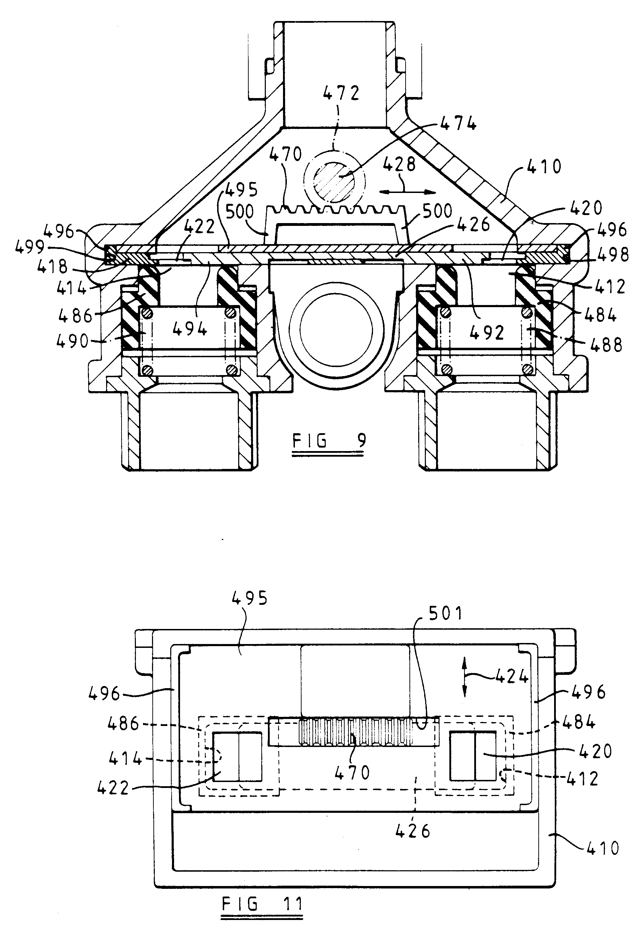

Referring now to the embodiment of Figs. 1 to 6, the flow control valve is a mixing valve for a domestic shower wherein the relative proportions of hot and cold water and the total water flow from the shower can be set independently by the user. The mixing valve comprises a body part which is only very diagrammatically illustrated at 10 and which includes a pair of spaced inlet ports 12 and 14 opening onto a planar internal surface 16 of the body 10. The inlet ports 12 and 14 are of square shape and communicate with respective hot and cold water inlets (not shown). A first slidable valve member in the form of a first plate 18 is in facial abutment with the internal surface 16 and includes a first pair of square flow control ports 20 and 22 which are of the same size and spacing as the inlet ports 12 and 14.

A first plate 18 is slidable horizontally to and fro in a first direction (indicated by double arrow 24) over the internal surface 16 so as to vary the effective cross-sectional area available for water to flow from the inlet ports 12 and 14 through the flow control ports 20 and 22, respectively. Fig. 1 shows the first plate 18 adjusted for maximum flow through both ports 20 and 22, whilst Fig. 3 shows it adjusted for about half maximum flow. It will be appreciated that the shape and size of the effective cross-sectional areas for the flow of hot and cold water respectively change in unison so that the ratio of such areas remains the same whatever the position of the first plate 18 which thus serves as a total flow control valve. This is because the ports are of quadrilateral shape with a first pair of opposite edges (the upper and lower edges as illustrated) extending in said first direction 24, whilst the second pair of opposite edges (the left and right hand edges as illustrated) extend perpendicularly to said first direction 24, with the spacing between the ports 20 and 22 being the same as that between the ports 12 and 14.

Fig. 2 shows a second valve member in the form of a second plate 26 added to the assembly of Fig. 1 and slidable over the surface of the first gate 15 to and fro vertically in a second direction (indicated by double arrow 28). The second plate 26 has two square flow control ports 30 and 32 of the same size as ports 12, 14, 20 and 22 and with the same horizontal spacing. However, the flow control ports 30 and 32 are staggered in said second direction 28 so that the upper edge of the port 30 is aligned with the lower edge of the port 32. The ports 30 and 32 are aligned with the ports 20 and 22 in said second direction 28.

In the position of second plate 26 shown in Fig. 2. i.e. the mid-position where the upper edge of port 30 and the lower edge of the port 32 are aligned with the horizontal centre lines of ports 20 and 22, the effective cross-sectional areas for the flow of both hot and cold water are of the same size and shape. This remains true even if the position of the first member 18 is adjusted, for example to the position shown in Fig. 4.

However, if second member 26 is moved to or fro in said second direction 28 from the position illustrated in Fig. 2, the remaining areas for the flow of water is increased while the other is decreased. Second member 18 thus serves as a shower temperature volume control by altering the relative proportions of hot and cold water.

It will be appreciated that the body 10 which is only partly shown in Figures 1 to 6 will be provided with guides constraining the plates 18 and 26 so that they are capable of movement to and fro only in the respective first and second directions 24 and 28. Additionally, it will be appreciated that a suitable operating mechanism will be connected with each plate 18 and 26 to enable it to be adjusted in position by the user. Hot and cold water which have passed through the ports 30 and 32 are combined in a chamber (not shown) in the body 10 and the combined flow leaves the body 10 through an outlet (also not shown) leading to a shower head.

Various flow possibilities are illustrated schematically in Figs. 5 and 6. Fig. 5 shows the port arrangement of Fig. 4 looking in the direction of the inlet ports 12 and 14. The ports 12 and 14 are shown in chain dotted lines and represent the maximum possible flow apertures for hot and cold water, respectively. The flow control ports 20 and 22 are shown in dashed lines. The first member 18 may be moved into any desired position between and including an extreme left position where the ports 20 and 22 are fully aligned with ports 12 and 14 to permit maximum possible flow and an extreme right position where the ports 20 and 21 are completely out of alignment with the respective ports 12 and 14 so that the unported regions of the first plate 18 seal against the surface 16 to stop any flow through the ports 12 and 14.

In Fig. 5, the second plate 26 is in mid-position so that flow of hot water from port 12 is only permitted through hatched area 34 and cold water flow from port 14 is only permitted through hatched area 36.

If the first plate 18 is moved to the left for example, the areas 34 and 36 will be increased simultaneously by the same amount, thereby increasing the flow at the outlet without changing the ratio of hot water to cold water.

If the second plate 26 is moved upwardly, as shown in Fig. 6, area 34 is increased and area 36 is correspondingly decreased, thereby increasing the proportion of hot water to cold water, but the total cross sectional area of 34 and 36 will remain unchanged, thereby having little effect upon the rate of flow at the outlet.

With this arrangement, either the rate of total flow or the relative proportions of the hot and cold water can be varied more or less independently even when area 34 or area 36 or both areas are relatively small.

Referring now to Fig. 7, the second embodiment of flow control valve shows a possible practical construction of the valve is illustrated. Parts of the valve which are similar to those of Figs. 1 to 6 are accorded the same reference numerals but in the 100 series. In this embodiment, inlet ports 112 and 114 are mutually spaced apart by the same distance as that between fluid control ports 120 and 122 in first plate 18. In contrast, the spacing between flow control ports 130 and 132 in second plate 126 are closer together by a distance corresponding to the port dimension, it being appreciated that all of the ports 112, 114, 120, 122, 130 and 132 are square and of the same dimensions.

Body 110 is formed in two parts 142, 144 which can be secured together by any convenient means, eg permanently by ultrasonic welding or the like. Body part 142 has a shallow rectangular recess 146 therein whose length is such as just to accommodate the first plate 118 and whose width corresponds to the width of the first plate 118 plus the port dimension. Thus, the recess 146 is of a size just to allow the first plate 118 to move by the required amount to and fro in first direction 124, the longitudinal edges of shallow recess 146 serving as abutments to limit such movement. The lateral edges of shallow recess 146 serve as guides and prevent sliding movement of first plate 118 in any other direction. First plate 118 has an integral tongue 148 provided with an internally screw threaded hole 150. The tongue 148 engages with clearance in a recess 152 in the body part 142. A shaft 154 is rotatable mounted in the body part 142 and has a screw threaded region 156 which is disposed in the recess 152 and engages in the screw threaded bore 150 of the tongue 148. The shaft 154 has a splined end region 158 which projects externally of the body 110 and engages with an internally splined recess 160 in a rotary manual control knob 162. It will thus be appreciated that rotation of the knob 162 causes movement of the first plate 118 in the first direction 124 and that such movement enables the total flow of hot and cold water to be adjusted as desired.

The second plate 126 is in facial abutment with the first plate 118 but is of greater length so that opposite end regions of the second plate 126 are engageable in respective shallow recesses 164 in body part 142. Side edges 166 of each recess 164 are spaced apart by a distance which is marginally greater than the width of the second plate 126 and so act to constrain the plate 126 from sliding in any direction other than in the second direction 128. Sliding movement in such second direction 128 by the required amount is permitted because the distance between end edges 168 of the respective recesses 164 is equal to the length of the second plate 126 plus the port dimension. The second plate 126 is provided with a pair of racks 170 on its face opposite to that which is adjacent the first plate 118. The racks are engaged by a pinion 172 on a shaft 174 extending through bush 176 in second body part 144. The shaft 174 extends externally of the body 110 and has a manual control lever 178 secured thereto. It will be appreciated that pivoting of lever 178 will cause the second plate 126 to move in the second direction 128. Because of the above described spacing of the ports 130 and 132 relative to the spacing between the ports 120 and 122 with which they respectively cooperate, it is to be understood that rotation of the lever 178 enables the proportion of hot water to cold water to be adjusted.

The body part 144 has a common outlet 180 for hot and cold water which have been combined in a common chamber (not shown) downstream of the ports 130 and 132.

Referring now to Fig. 8, the embodiment illustrated therein has parts numbered so as to correspond to similar parts in the embodiment of Fig. 7, but in the 200 series. In this embodiment, a single plate 218 is employed which is movable to and fro in both of a first direction 224 and a second direction 228, in place of the first and second plates 118 and 126 which are respectively movable in first direction 124 and second direction 128. Plate 218 is mounted in a carrier frame 282. The opening in the carrier frame 282 has a length which is equal to the sum of the length of the plate 218 and the dimension of equi-sized square ports 220 and 222. The overall length of carrier frame 282 is marginally less than rectangular recess 246 provided in body part 242. The sum of the dimension of port 220 or 222 and the overall width of the carrier frame 282 is equal to the width of recess 246 in body part 242. It will therefore be appreciated from the above that the end walls of recess 246 provide guides for constraining carrier frame 282, and thus plate 218, to move in the first direction 224 upon operation of knob 262 which acts on carrier frame 282 by way of operating rod 254 whose screwthreading 256 engages in internally screw threaded bore 210 of tongue 248 integral with carrier frame 282. The internal longitudinal edges of carrier frame 282 serve to constrain plate 218 to move only in second direction 228 when it is moved relative to the frame 282 upon operation of lever 278 acting on plate 218 via rod 274, rack 272 and pinions 270.

The distance between the ports 212 and 214 is equal to the sum of the dimension of the ports and the distance between port 220 and 222.

As in the case of the previously described embodiments, movement of plate 218 to and fro in the first direction 224 causes the effective cross-sectional area for flow of hot and cold water through the body 210 to be increased or decreased simultaneously. Movement of plate 218 to and fro in the second direction 228 causes the effective cross-sectional area for flow of hot water to be increased or decreased whilst that for flow of the cold water is respectively decreased or increased by the same amount.

Referring now to Figs. 9 to 11, the flow control valve illustrated therein is, in certain respects, similar to that of Fig. 7 and similar parts are accorded the same reference numerals but in the 400 series. Valve body 410 has hot and cold water inlet ports 412 and 414, respectively defined by rubber seals 484 and 486 which are biassed upwardly by respective springs 488 and 490 against the underside of ported plate 418 having flow control ports 420, 422 therethrough. Disposed in stacked relationship on the ported plate 418 and on the opposite side thereof to the inlet ports 412 and 414 is plate 426 which, in this embodiment, is unported. Plate 426 is provided with a pair of projections 492, 494 thereon of rectangular shape which engage in the respective flow control ports 420, 422. The height of each projection 492, 494 is equal to the thickness of the ported member 418 in the region of the flow control ports 420, 422 so that the lower surface of each projection 492, 494 is coplanar with the lower surface of the ported plate 418 and with the upper, sealing surface of the seals 484, 486 so that the latter can engage against the underside of the respective projections 492, 494.

The unported plate 426 is retained in position against the ported plate 418 by means of a further plate 495 which is a snap-fit within an upstanding edge 496 at each end of the plate 418. In this way, the ported plate 418, unported plate 426 and further ported plate 495 can be sub-assembled together as a unit before installation into the body 410. This sub-assembly is a sliding fit within mutually parallel guide grooves 498, 499 provided internally of the body 410.

The whole sub-assembly of plates 418,426 and 495 are controllably slidable within the grooves 498 and 499 in either direction indicated by double-headed arrow 424 (see Fig. 11) to enable the total flow of water throughout the valve to be adjusted. For this purpose, the ported plate 418 is provided with a pair of spaced downwardly-projecting flanges 448 embracing a captive nut 449 engaging a worm 456. The worm 456 is mounted on a drive shaft 454 leading to a manually operable flow control knob 462.

For adjusting the ratio of hot to cold water, the unported plate 426 is moved selectively in either direction indicated by double-headed arrow 428 (see Fig. 9). For this purpose, unported plate 426 is provided with rack 470 supported by legs 500 which project from the unported plate 426 through a slot 501 in the further plate 495, such slot being sufficiently long to permit the required distance of travel of the unported plate 426 between an extreme left position in which flow of cold water is completely shut off so that only hot water is allowed to flow, an extreme right position in which only cold water is allowed to flow. In each of these extreme positions, a respective stepped side edge of the unported plate 426 engages against a correspondingly stepped side edge of the respective flow control port 420, 422. In order to move the ported plate 426 as aforesaid, an elongate pinion 472 is provided on shaft 474. Shaft 474 carries a gear wheel 502 which cooperates with gearing 504 on manually operable rotary control knob 478 which is rotatable about an axis coincident with the axis of rotation of knob 462. The pinion 472 is sufficiently long (see Fig. 10) to ensure that it always engages with rack 470 irrespective of the position thereof in the direction of double-headed arrow 424.

In Fig. 11, the valve is shown in a condition permitting maximum total flow with equal hot and cold water flows.

In the above described embodiments, particularly that of Figs. 9 to 11, it is to be appreciated that, if desired, a variable geometry of opening characteristics may be provided so that, at the hotter temperatures and/or lower volumes, relatively large movements of the respective control knobs only produce relatively small movements of the plate or plates. This is advantageous because, at such settings, small changes in the position of the plate or plates results in a relatively large change in flow. The variable geometry may be achieved, for example, by using oval gearing.

Additionally, in place of purely manual temperature control, it is possible to arrange for temperature control via a manually settable thermostat or a pressure balance arrangement.

Referring now to Fig 12, the modification shown therein relates to the embodiment of Figs 9 to 11 and serves to reduce frictional drag on the unported plate 426. This is advantageous particularly in the case where the plate 426 is operated via a thermostat (not shown) where a prompt response to temperature changes is highly desirable. As can be seen from Fig 12, projection 492 is relatively narrow and projects downwardly so as to terminate just short of the lower surface of the ported plate 418. The flow control port 420 in the plate 418 is more localised so that the seal 484 seals only against the plate 418 and never bears against the unported plate 426. The same arrangement is provided for the cold water side of the valve.

## Claims

1. A flow control valve providing total and proportional control of two fluids comprising a valve body (110: 210, 410) with a separate inlet port (112, 114, 212, 214, 412, 414) for each fluid and an outlet (180, 280) for the fluids, slidable valve means (118, 126; 218, 418, 426) mounted in the body for sliding movement relative to the inlet ports, the valve means including at least one valve plate (118, 218, 418) with two spaced flow control ports (120, 122, 220, 222, 420, 422) each of which cooperates with one of the inlet ports to control the flow of fluid therethrough, the plate being located between the inlet ports and the outlet, guide means (166,168, 262, 498, 499, 500, 501) constraining the valve means to slide relatively to the inlet ports in first (124, 226, 424) and second directions (128, 228, 428) to control the flow of fluid therethrough, first (162,262, 462) and second (178, 278, 474) independently operable means connected with the valve means and arranged to move the latter in said first and second directions respectively, the inlet and flow control ports being so positioned relative to each other and to the first and second directions that movement of the valve means in the first direction causes the effective cross-sectional area for flow of each fluid to be changed simultaneously, whilst movement of the valve means in the second direction causes the effective cross-sectional area for flow of one of the fluids to be increased or decreased whilst that for flow of the other fluid is respectively decreased or increased characterised in that the first and second directions are transverse one with respect to the other and in that each one of the inlet ports and flow control ports is of quadrilateral cross-sectional shape with a pair of opposite edges thereof extending in the first direction and a second pair extending in the second direction, the first and second directions being substantially co-planar.

2. A valve as claimed in claim 1 characterised in that the valve means comprises a valve plate (218) having a flow control port (220, 222) for each of a respective one of the inlet ports (212, 214) and in that the guide means (282) is arranged to constrain the valve plate (218) for movement in both of said directions (224, 228).

3. A valve as claimed in claim 1 characterised in that the valve means comprises a first valve plate (118) slidable in said first direction (124) and having a first set of control ports (120, 122); and a second valve plate (126) slidable in said second direction (128) and having a second set of control ports (130, 132).

4. A valve as claimed in claim 1 characterised in that the valve means comprises (a) a ported valve plate (418) having flow control ports (420, 422) and being slidable in said first direction (424) and (b) an unported member (426) disposed on an opposite side of the ported valve plate (418) to the inlet ports (412, 414) and being slidable in said second direction (428) and having a pair of mutually spaced opposite side edges extending in said first direction (424), each side edge cooperating with one of said flow control ports (420, 422) so as to alter the effective cross-sectional area thereof upon sliding movement of the unported member (426) in the second direction (428).

5. A valve as claimed in any of the preceding claims characterised in that the first and second directions are mutually perpendicular to each other.

6. A valve as claimed in any preceding claim characterised in that the valve is a mixer valve for mixing the two fluids and in that the valve body (210, 410) has a common chamber with which all of the flow control ports are in communication and in that the outlet (180, 280) leads from the common chamber.

## Patentansprüche

1. Ein Ventil für die Durchflußregelung, welches eine totale und eine proportionale Regelung von zwei fließenden Medien gewährleistet und welches ausgestattet ist mit einem Ventilgehäuse (110, 210, 410), das eine getrennte Einlaßöffnung (112, 114, 212, 214, 412, 414) für jedes fließende Medium sowie eine Auslaßöffnung (180, 280) für die fließenden Medien aufweist; mit gleitenden Ventilelementen (118, 126, 218, 418, 426), welche in dem Gehäuse so eingebaut sind, daß sie eine gleitende Bewegung gegenüber den Einlaßöffnungen ausführen können, wobei die Ventilelemente wenigstens eine Ventilplatte (118, 218, 418) mit zwei einen Abstand zueinander aufweisenden Mündungen für die Durchflußregelung (120, 122, 220, 222, 420, 422) aufweisen, wobei eine jede derselben mit einer der Einlaßöffnungen zusammenarbeitet um den Durchfluß der fließenden Medien durch dieselben zu regeln und wobei die Platte zwischen den Einlaßöffnungen und der Auslaßöffnung angeordnet ist; mit Führungshilfsmitteln (166, 168, 262, 498, 499, 500, 501), welche die Ventilelemente dazu zwingen gegenüber den Einlaßöffnungen in einer ersten Richtung (124, 226, 424) und in einer zweiten Richtung (128, 228, 428) zu gleiten, um den Durchfluß des fließenden Mediums durch dieselben zu regeln; mit ersten (162, 262, 462) und mit zweiten (178, 278, 474) unabhängig voneinander betriebsbereiten Mitteln, die mit den Ventilelementen verbunden sind und die so angeordnet sind, daß sie die letztgenannten in die erste beziehungsweise die zweite der genannten Richtungen bewegen, wobei die Einlaßöffnungen und die Mündungen für die Durchflußregelung, die einen gegenüber den anderen und gegenüber der ersten und der zweiten Richtung so angeordnet sind, daß eine Bewegung der Ventilelemente in die erste Richtung eine gleichzeitige Änderung der tatsächlichen Fläche des Durchflußquerschnittes für jedes fließende Medium nach sich zieht, während die Bewegung der Ventilelemente in die zweite Richtung eine Vergrößerung oder Verkleinerung der tatsächlichen Fläche des Durchflußquerschnittes für eines der fließenden Medien nach sich zieht, wohingegen diejenige für den Durchfluß des anderen fließenden Mediums verkleinert beziehungsweise vergrößert wird, dadurch gekennzeichnet, daß die erste und die zweite Richtung, die eine in Bezug auf die andere, schräg verlaufen und daß eine jede der Einlaßöffnungen und der Mündungen für die Durchflußregelung eine vierseitige Querschnittsform aufweisen, wobei ein Paar der sich einander gegenüberliegenden Ränder derselben sich in die erste Richtung erstreckt und ein zweites Paar sich in die zweite Richtung erstreckt, wobei die erste und die zweite Richtung im wesentlichen koplanar sind.

2. Ein Ventil, so wie es in Anspruch 1 beansprucht worden ist, dadurch gekennzeichnet, daß die Ventilelemente eine Ventilplatte (218) aufweisen, welche mit einer Mündung für die Durchflußregelung (220, 222) für eine jede der verschiedenen Einlaßöffnungen (212, 214) versehen ist und daß die Führungshilfsmittel (282) eine Anordnung aufweisen welche die Ventilplatte (218) zu einer Bewegung in die beiden der besagten Richtungen (224, 228) zwingt.

3. Ein Ventil, so wie es in Anspruch 1 beansprucht worden ist, dadurch gekennzeichnet, daß die Ventilelemente eine erste Ventilplatte (118) aufweisen, welche in die besagte erste Richtung (124) verstellbar ist und ausgestattet ist mit einem ersten Satz von Mündungen (120, 122) die der Regelung dienen und daß eine zweite Ventilplatte (126) in die besagte zweite Richtung (128) verstellbar ist und ausgestattet ist mit einem zweiten Satz von Mündungen (130, 132) die der Regelung dienen.

4. Ein Ventil, so wie es in Anspruch 1 beansprucht worden ist, dadurch gekennzeichnet, daß die Ventilelemente ausgestattet sind (a) mit einer ersten mit Öffnungen versehenen Ventilplatte (418), welche Mündungen für die Durchflußregelung (420, 422) aufweist und welche in die besagte erste Richtung (424) verstellbar ist, sowie (b) mit einem Zwischenglied ohne Öffnungen (426), welches auf der entgegengesetzten Seite in Bezug auf die mit Öffnungen versehene Ventilplatte (418) und die Einlaßöffnungen (412, 414) angeordnet ist, welches in die besagte zweite Richtung (428) verstellbar ist und welches ein Paar einander mit Abstand gegenüberliegende Seitenkanten aufweist die sich in die besagte erste Richtung (424) erstrecken, wobei jede Seitenkante mit einer der besagten Mündungen für die Durchflußregelung (420, 422) so zusammenarbeitet, daß deren tatsächliche Querschnittsoberfläche infolge der gleitenden Bewegung des Zwischengliedes ohne Öffnungen (426) in die zweite Richtung (428) einer Änderung unterliegt.

5. Ein Ventil, so wie es in irgendeinem der vorangehenden Ansprüche beansprucht worden ist, dadurch gekennzeichnet, daß die erste Richtung und die zweite Richtung gegenseitig senkrecht die eine zu der anderen stehen.

6. Ein Ventil, so wie es in irgendeinem der vorangehenden Ansprüche beansprucht worden ist, dadurch gekennzeichnet, daß das Ventil ein Mischventil ist zwecks Vermischens der beiden fließenden Medien und daß das Ventilgehäuse (210, 410) eine gemeinsame Kammer aufweist mit welcher alle Mündungen für die Durchflußregelung in Verbindung stehen und daß die Auslaßöffnungen (180, 280) aus der gemeinsamen Kammer herausführen.

## Revendications

1. Vanne de commande de débit qui permet une commande totale et une commande proportionnelle de deux fluides et qui comprend: un corps de vanne (110, 210, 410) avec un orifice d'entrée (112, 114, 212, 214, 412, 414) séparé pour chaque fluide ainsi qu'un orifice de sortie (180, 280) pour les fluides; des éléments de vanne mobiles (118, 126, 218, 418, 426) montés dans le corps en vue d'un mouvement de patinage par rapport aux orifices d'entrée, les éléments de vanne englobant au moins une plaque de vanne (118, 218, 418) avec deux embouchures espacées de contrôle de l'écoulement (120, 122, 220, 222, 420, 422) dont chacune coopère avec l'un des orifices d'entrée pour régler le débit du fluide à travers celui-ci, la plaque étant emplacée entre les orifices d'entrée et l'orifice de sortie; des moyens de guidage (166, 168, 262, 498, 499, 500, 501) forçant les éléments de vanne à glisser par rapport aux orifices d'entrée dans une première direction (124, 226, 424) et dans une deuxième direction (128, 228, 428) afin de régler le débit du fluide à travers ceux-ci; un premier accessoire (162, 262, 462) ainsi qu'un deuxième accessoire (178, 278, 474) qui peuvent être actionnés indépendamment, qui sont raccordés aux éléments de vanne et qui sont agencés de manière à déplacer ces derniers dans ladite première direction et dans ladite deuxième direction respectivement, les orifices d'entrée ainsi que les embouchures de contrôle de l'écoulement étant positionnés de telle sorte les uns par rapport aux autres et par rapport à la première et à la deuxième direction que le mouvement des éléments de vanne dans la première direction a pour résultat que la surface effective de la section d'écoulement de chaque fluide est changée en même temps, alors que le mouvement des éléments de vanne dans la deuxième direction a pour résultat que la surface effective de la section d'écoulement de l'un des fluides est accrue ou diminuée, alors que celle pour l'écoulement de l'autre fluide est diminuée ou accrue respectivement, caractérisée en ce que la première direction et la deuxième direction sont disposées transversalement l'une par rapport à l'autre et en ce que chacun des orifices d'entrée et des embouchures de contrôle d'écoulement possède une section de forme tétragonale avec une paire de leurs bords opposés s'étendant dans la première direction et une seconde paire s'étendant dans la deuxième direction, la première direction et la deuxième direction étant substantiellement coplanaires.

2. Une vanne telle que revendiquée dans la revendication 1, caractérisée en ce que les éléments de vanne comportent une plaque de vanne (218) pourvue d'une embouchure de contrôle d'écoulement (220, 222) pour chacun des différents orifices d'entrée (212, 214) et en ce que les moyens de guidage (282) sont arrangés pour contraindre la plaque de vanne (218) à un mouvement dans les deux des directions mentionnées (224, 228).

3. Une vanne telle que revendiquée dans la revendication 1, caractérisée en ce que les éléments de vanne comportent une première plaque de vanne (118) qui est mobile dans ladite première direction (124) et qui est pourvue d'un premier ensemble d'embouchures de contrôle (120, 122); ainsi qu'une deuxième plaque de vanne (126) qui est mobile dans ladite deuxième direction (128) et qui est pourvue d'un deuxième ensemble d'embouchures de contrôle (130, 132).

4. Une vanne telle que revendiquée dans la revendication 1, caractérisée en ce que les éléments de vanne comportent: (a) une plaque de vanne à lumières (418) qui est pourvue d'embouchures de contrôle d'écoulement (420, 422) et qui est mobile dans ladite première direction (424) ainsi que (b) un membre sans lumières (426) qui est disposé sur un côté opposé et à la plaque de vanne à lumières (418) et aux orifices d'entrée (412, 414), qui est mobile dans ladite deuxième direction (428) et qui est pourvu d'une paire de bords latéraux, opposés, mutuellement espacés et s'étendant dans ladite première direction (424), chaque bord latéral coopérant avec l'une desdites embouchures de contrôle d'écoulement (420, 422) de manière à en modifier la surface effective de la section à la suite du mouvement de patinage du membre sans lumières (426) dans la deuxième direction (428).

5. Une vanne telle que revendiquée dans une quelconque des revendications qui précèdent, caractérisée en ce que la première direction et la deuxième direction sont réciproquement perpendiculaires l'une par rapport à l'autre.

6. Une vanne telle que revendiquée dans une quelconque des revendications qui précèdent, caractérisée en ce que la vanne est une vanne mélangeuse pour mélanger les deux fluides et en ce que le corps de vanne (210, 410) possède une chambre commune avec laquelle toutes les embouchures de contrôle d'écoulement sont en communication et en ce que l'orifice de sortie (180, 280) conduit hors de la chambre commune.
